Europäisches Patentamt

European Patent Office

Office européen des brevets

(11) Numéro de publication: **0 403 356 B1**

# FASCICULE DE BREVET EUROPEEN

(45) Date de publication de fascicule du brevet: **31.08.94**  (51) Int. Cl.5: **A23C 15/02**, A23C 15/12

(21) Numéro de dépôt: **90401602.9**

(22) Date de dépôt: **12.06.90**

Le dossier contient des informations techniques présentées postérieurement au dépôt de la demande et ne figurant pas dans le présent fascicule.

(54) **Composition aqueuse destinée à la fabrication du beurre, constituée d'une partie acide et d'une partie aromatique biologique, et son application à la fabrication du beurre.**

(30) Priorité: **13.06.89 FR 8907787**

(43) Date de publication de la demande:
**19.12.90 Bulletin 90/51**

(45) Mention de la délivrance du brevet:
**31.08.94 Bulletin 94/35**

(84) Etats contractants désignés:
**AT BE CH DE DK ES FR GB IT LI NL SE**

(56) Documents cités:
**DD-A- 230 694
DE-A- 2 652 558
FR-A- 2 556 936**

(73) Titulaire: **ETABLISSEMENTS BOLL
Le Moulin d'Aulnay, B.P. 64, Saint-Germain-les-Arpajon
F-91292 Arpajon Cédex (FR)**

(72) Inventeur: **Maruejouls, Robert
42, rue Salvador Allendé
F-91290 La Norville (FR)**

(74) Mandataire: **Casalonga, Axel et al
BUREAU D.A. CASALONGA - JOSSE
Morassistrasse 8
D-80469 München (DE)**

## Description

L'invention concerne une composition aqueuse destinée à la fabrication du beurre, constituée d'une partie acide et d'une partie biologique aromatique et un procédé de fabrication du beurre utilisant cette composition.

Le beurre est fabriqué par barattage, lavage et malaxage de la crème.

Traditionnellement, la crème est acidifiée par fermentation au moyen de bactéries lactiques. Après l'étape de barattage, le beurre obtenu présente dans le temps une stabilité faible.

En effet, un phénomène de rancissement apparaît rapidement, lui conférant un mauvais goût.

Le babeurre obtenu, dans ces conditions, est difficilement valorisable, car trop acide.

Une technique plus récente consiste à baratter une crème douce (non acidifiée) afin d'obtenir un babeurre doux. Les grains de beurre obtenus par barattage sont additionnés, lors du malaxage, de deux levains préparés séparément. On prépare ces deux levains à acidité et concentration en arôme données, à partir d'une base lactée sur laquelle sont développées des souches spécifiques de ferments lactiques. On ajoute à l'un d'entre eux, sous très forte agitation, de l'acide lactique biologique, obtenu par fermentation, ce cui conduit à une chute brutale du pH et à la formation d'une grande quantité de composées aromatiques, en particulier de l'acide diacétyl lactique.

Cette technique a été décrite dans la demande de brevet DE-A-2 652 558.

Ces deux levains apportent arôme et acide aux grains de beurre. On obtient après incorporation de ces constituants, lors du malaxage, un beurre aux caractéristiques de pH et d'arôme souhaités. Cependant, les qualités organoleptiques du beurre obtenu sont sujettes aux fluctuctions inhérentes à la qualité des levains préparés.

La demanderesse a découvert une composition aqueuse constituée à la fois d'une partie acide et d'une partie aromatique biologique, permettant d'apporter simultanément arôme et acide nécessaires à la fabrication du beurre. Ce mélange est incorporé dans les grains de beurre, lors du malaxage; il remplace les deux levains utilisés selon la technique antérieure et préparés séparément.

Il permet, d'une manière surprenante, d'obtenir une grande régularité dans la production du beurre et d'éliminer les fluctuations inhérentes à la qualité des levains.

Il permet également de simplifier le procédé de fabrication du beurre par suppression de l'étape de préparation des mêmes levains.

L'objet de la présente invention est donc une composition aqueuse destinée à la fabrication du beurre, contenant un mélange constitué d'une partie acide et d'une partie aromatique biologique.

Un autre objet de l'invention consiste en un procédé de fabrication du beurre, utilisant la composition conforme à l'invention.

D'autres objets apparaitront à la lecture de la description.

La composition destinée à la fabrication du beurre est caractérisée par le fait qu'elle contient un mélange aqueux présentant un extrait sec important, constitué d'un lacto-sérum acide de caséïnes ou de fromagerie, décationné et d'un fermentat de bactéries lactiques développé sur un substrat laitier optimisé.

Le lacto-sérum acide de caséines, conforme à la présente invention, est décationné, c'est-à-dire ne contenant que des traces de cations, calcium, sodium, potassium, phosphore. Il contient une proportion pondérale en minéraux faible, inférieure à 10% et de préférence inférieure à 8%, un taux d'alcalinité des cendres inférieur à 750 et de préférence à 500, exprimé en mg de $Na_2CO_3$/g de cendres et les rapports des différents éléments présentent les caractéristiques suivantes :

$Ca/P < 1$ ; $K/P < 1,3$ ; et $P/Cl \geq 0,6$.

Le lacto-sérum acide de caséines ou de fromagerie décationné, conforme à l'invention, est obtenu par traitement du lait au moyen d'une résine échangeuse de cations, sous forme acide, selon un procédé connu.

Ce procédé comporte les étapes suivantes :

(a) on met en contact du lait avec une résine échangeuse de cations sous forme acide, à une température de 0 à 4°C pendant la durée nécessaire pour abaisser le pH dudit lait à une valeur inférieure ou égale à 3,8 ;

(b) on mélange le lait ainsi traité, après séparation de la résine échangeuse, avec une quantité suffisante de lait non traité pour élever le pH jusqu'au voisinage du point isoélectrique de la caséine du lait. On réchauffe ensuite le mélange obtenu à une température de l'ordre de 10 à 60°C pour coaguler la caséine contenue à la fois dans le lait traité et dans le lait non traité. On sépare ensuite la caséine ainsi coagulée du lacto-sérum que l'on souhaite obtenir selon la présente invention.

Le lacto-sérum ainsi récupéré peut être délactosé ou non. Il peut être séché ou subir toute opération technologique usuelle, telle que déminéralisation, ultrafiltration, concentration par osmose inverse.

Le traitement du lait par la résine échangeuse de cations peut être réalisé par des techniques connues en soi, soit par percolation du lait à travers un lit fixe de résine échangeuse de cations, soit par passage du lait à contre-courant avec la résine échangeuse de cations, soit par agitation mécanique ou pneumatique du mélange lait-résine échangeuse de cations, soit par tout autre procédé convenable.

Comme résines échangeuses, on peut utiliser les résines échangeuses de cations, sous forme acide, de type classique, utilisées en déminéralisation classique, incluant celles utilisées pour la déminéralisation du petit-lait.

En particulier, on peut utiliser, selon ce procédé, les résines échangeuses de cations fortement acides, à squelette polystyrénique, portant des groupements acides sulfoniques, présentées sous forme de gel ou de solides macro-poreux (billes, bâtonnets, etc.). Les résines de type macro-poreux sont préférées aux résines de type gel en raison de leur résistance mécanique plus performante.

Le constituant aromatique, contenu dans la composition conforme à l'invention, est obtenu en distillant un fermentat de bactéries lactiques aromatiques, développé sur un substrat laitier.

Il est obtenu par la fermentation d'un substrat d'origine laitière, par une souche de Lactococcus lactis subsp. diacetylactis, retenue pour son aptitude à produire de grandes quantités de composés aromatiques.

En fin de croissance, le fermentat obtenu est chauffé entre 60 et 100°C, jusqu'à obtenir un produit de distillation. Ce distillat constitue le produit aromatique concentré utilisé selon la présente invention.

La composition aqueuse, conforme à l'invention, présente un extrait sec de 200 à 300 g/litre, une concentration en diacétyle de l'ordre de 100 ppm, un pH de 3,5 pour une acidité titrable de 300 à 400°D (10°D correspondent à 1 ml de soude N/9).

Le procédé de fabrication du beurre, conforme à la présente invention, consiste essentiellement à baratter, dans un premier temps, une crème non surie, ayant une teneur en matière grasse de 15 à 75% en poids, à une température de 5 à 20°C, pour former des granules de beurre, puis à égoutter le babeurre restant. Au cours de l'étape de malaxage, on incorpore dans les granules de beurre obtenues par barattage, une composition aqueuse telle que définie précédemment, dans une proportion de 25 à 30 litres pour une tonne de granules de beurre, de manière à obtenir un beurre acidifié aromatisé, contenant environ 2 à 4 ppm de diacétyle et ayant un pH de sérum compris entre 4,8 et 5,2.

Lors du barattage de la crème non surie, conformément au procédé de l'invention, l'émulsion eau-dans-graisse obtenue contient peu ou pas d'ions cuivre et d'acides gras libres. Ceci donne au beurre un goût agréable et lui permet de se conserver beaucoup mieux que celui fabriqué traditionnellement par barattage de crème surie, du fait que pendant la conservation au froid, il ne peut se produire de dégradation par oxydation des constituants graisseux, ni de rancissement du fait des grandes quantités d'acides gras.

Conformément aux réglementations en vigueur dans de nombreux pays, un beurre de qualité doit contenir au moins 80% en poids de matières grasses, au plus 16% en poids d'humidité, et au plus 2% en poids de matières non grasses sèches.

Selon le procédé conforme à la présente invention, le malaxage du beurre étant effectué à partir d'une crème non surie, la teneur en eau ne peut être réduite à beaucoup moins de 12% en poids et la teneur en matières grasses non sèches ne peut être réduite à moins de 1% en poids.

La composition aqueuse, conforme à l'invention, est donc malaxée dans le beurre, dans des proportions ne dépassant pas 3 à 4% en poids, et de préférence dans des proportions comprises entre 2 et 3% en poids.

Le réglage fin de la teneur en eau et de la teneur en matières solides non grasses du beurre obtenu, conformément à la présente invention, est effectué par addition simultanée dans le beurre, lors du malaxage, de la composition aqueuse conforme à l'invention, et d'une solution de nature laitière, par exemple riche en lactose dont la concentration connue permet d'apporter la charge sèche manquante et le taux d'humidité manquant.

La concentration de cette solution lactosée est calculée de manière à obtenir à la sortie du malaxeur, un beurre présentant les caractéristiques imposées par la réglementation en vigueur à savoir : 16% en poids au plus d'humidité et au plus 2% en poids de matières non grasses sèches.

Elle dépend de la teneur en eau et de la teneur en matières solides non grasses des grains de beurre à l'entrée du malaxeur.

La concentration en lactose contenue dans cette solution de nature laitière varie en fonction de la quantité de composition acide aromatique ajoutée dans le beurre lors du malaxage.

Les exemples qui suivent servent à illustrer la présente invention :

EXEMPLE 1

De la crème pasteurisée ayant une teneur en matières grasses d'environ 40% en poids est maintenue pendant 16 heures à 6°C puis chauffée à 13°C afin d'obtenir le taux nécessaire de cristallisation des matières grasses. A l'aide d'une machine à fabriquer le beurre du type Wesphalia fonctionnant en continu, la crème est alors barattée tandis que le babeurre non suri est séparé avant l'introduction des granules de beurre dans le malaxeur.

A l'entrée du malaxeur, les granules renferment 13% d'humidité et 1,15% de non gras sec.

Lors du malaxage, on ajoute par tonne de beurre, 27,4 kg de composition constituée de lactosérum de caséines acide décationné et un concentré de fermentat de lactococcus lactis diacétylactis développé sur un substrat laitier optimisé, à 270 g/l d'extrait sec et 150 ppm de diacétyle et 11 kg d'une solution lactosée à 9% de lactose.

On obtient un beurre contenant 16% d'humidité, 2% de non-gras sec, un pH de sérum de 4,9, une teneur en diacétyle de 2,8 ppm.

EXEMPLE 2

On procède dans les mêmes conditions que l'exemple 1.

A l'entrée du malaxeur, les granules de beurre contiennent 14% d'humidité et 1,25% d'extrait sec.

Lors du malaxage, on ajoute par tonne de beurre 27,4 kg de composition telle que définie dans l'exemple 1.

On obtient un beurre contenant 16% d'humidité, 2% de non-gras sec, un pH de sérum de 4,8, une teneur en diacétyle de 2,9 ppm.

**Revendications**

1. Composition aqueuse destinée à la fabrication du beurre, caractérisée par le fait qu'elle contient un mélange présentant un extrait sec de 200 à 300 g/l constitué d'un distillat de fermentat de bactéries lactiques aromatiques développé sur un substrat laitier optimisé et d'un lactosérum acide décationné obtenu par traitement du lait au moyen d'une résine échangeuse de cations, sous forme acide.

2. Composition selon la revendication 1, caractérisée par le fait que le lactosérum acide décationné contient une proportion pondérale en minéraux inférieure à 10% et de préférence inférieure à 8%, un taux d'alcalinité des cendres inférieur à 750 et de préférence à 500 mg de $Na_2CO_3$/g de cendres et que les rapports des différents éléments présentent les caractéristiques suivantes :

   Ca/P < 1 ; K/P < 1,3 ; et P/Cl ≧ 0,6.

3. Composition selon la revendication 1, caractérisée par le fait que le distillat de fermentat de bactéries lactiques aromatiques est un distillat de fermentat d'une souche de Lactococcus lactis subsp. diacétylactis développé sur un substrat laitier optimisé.

4. Composition selon l'une quelconque des revendications 1 à 3, caractérisée par le fait qu'elle présente Une concentration en diacétyle de l'ordre de 100 ppm et un pH de l'ordre de 3,5 pour une acidité titrable de 300 à 400° D.

5. Composition selon l'une quelconque des revendications 1 à 4, caractérisée par le fait que le lactosérum acide est obtenu par un procédé comportant les étapes suivantes :
   (a) en met en contact du lait avec une résine échangeuse de cations sous forme acide, à une température de 0 à 4° C pendant la durée nécessaire pour abaisser le pH dudit lait à une valeur inférieure ou égale à 3,8 ;
   (b) on mélange le lait ainsi traité, après séparation de la résine échangeuse avec une quantité suffisante de lait non traité pour élever le pH jusqu'au voisinage du point isoélectrique de la caséine du lait ; on réchauffe ensuite le mélange obtenu à une température de l'ordre de 10 à 60° C pour coaguler la caséine contenue à la fois dans le lait traité et dans le lait non traité ; on sépare ensuite la caséine ainsi coagulée du lactosérum que l'on souhaite obtenir.

6. Procédé de fabrication du beurre , consistant à baratter dans un premier temps , une crème non surie, ayant une teneur en matières grasses de 15 à 75% en poids à une température de 5 à 20° C, pour former des granules de beurre, puis à égoutter le babeurre restant, puis dans une deuxième temps, à malaxer les granules de beurre obtenues par barattage, caractérisé par le fait que lors de l'étape de malaxage, on incorpore dans les granules de beurre une composition aqueuse selon l'une quelconque des revendications 1 à 5 , dans une proportion de 25 à 30 litres pour 1 tonne de granules de beurre de manière à obtenir un beurre acidifié aromatisé, contenant environ 2 à 4 ppm de diacétyle et ayant un pH de sérum compris entre 4, 8 et 5,2.

7. Procédé selon la revendication 6. caractérisé par le fait que l'on additionne simultanément au cours du malaxage, une composition selon l'une quelconque des revendication 1 à 5 et une solution lactosée, de manière à régler l'humidité et l' extrait sec non gras du beurre obtenu.

## Claims

1. Aqueous composition designed for use in the manufacture of butter, characterized by the fact that it contains a mix having between 200 and 300 g/l of dry matter made from an aromatic lactic bacterial ferment developed from an optimized milk substrate and a decationized acidic milk serum obtained by the processing of milk with a cation exchanging resin in acidic form.

2. Composition, as defined in claim 1, characterized by the fact that the milk serum made from casein or decationized acidic cheese containing a low level of minerals as a proportion of total weight less than 10% , preferably less than 8 % , an alkalinity level of milk ash below 750 and preferably below 500 mg of $Na_2CO_3$/g of milk ash and that the proportions of the various ingredients show the following characteristics :

   Ca/P < 1 ; K/P < 1.3 ; and P/Cl ≧ 0.6

3. Composition, as defined in claim 1, characterized by the fact that the biological aromatic product is the ferment of a Lactococcus lactis subsp. diacetylactis strain developed from an optimized milk substrate.

4. Composition as defined in any one of claims 1 to 3 , characterized by the fact that it contains a concentration of diacetyl of approximately 100 ppm. and a pH of 3.5 for a titratable acidity of between 300 and 400° D.

5. Composition as defined in any one of claims 1 to 4, characterized by the fact that the acidic milk serum is obtained according to a process containing the following steps :
   (a) the milk is placed in contact with the cation exchanging resin in acidic form at a temperature of between 0 and 4° C until the pH of milk reaches a level which is less than or equal to 3.8;
   (b) the processed milk is mixed, after separation of the exchanging resin, with a quantity of milk sufficient to raise pH to a level bordering the isoelectric point of the milk casein; next, the mix thus obtained is reheated at a temperature of betweeen 10 and 60° C so clotting the case in which is present in both the processed milk and the unprocessed milk; the clotted casein is then separated from the milk serum which this invention is designed to obtain.

6. Procedure for the manufacture of butter consisting of first churning unsoured cream with a fat content of 15 % to 75 % of its total weight at a temperature of between 5 and 20° C to form butter granules where the residual buttermilk remaining is drained ; secondly, the butter grains obtained from churning are then kneaded, characterized by the fact that during kneading, an aqueous composition according to any one of claims 1 to 5 is introduced in the butter granules in a proportion of 25 to 30 litres per tonne of butter grains so that the butter obtained is acidic and aromatized with approximately 2 to 4 ppm of diacetyl and a serum pH of between 4.8 and 5.2.

7. Procedure as defined in claim 6, characterized by the fact that both a composition, as defined in any one of claims 1 to 5 , and a lactosed solution are added during kneading so as to regulate the moisture levels and the non-fat dry matter of the butter obtained.

## Patentansprüche

1. Wässrige Mischung für die Herstellung von Butter, die dadurch gekennzeichnet ist, daß sie ein Gemisch mit einem Trockenextrakt von 200 bis 300 g/l, bestehend aus einem Gärprodukt aus aromatischen Milchbakterien, welche aus einem optimierten Milchsubstrat entwickelt wurde, und einem sauren von Kationen befreiten Lacto-Serum, welches durch eine Behandlung der Milch mittels eines Harzes, Austauscher von Kationen und in saurer Form hergestellt wird.

2. Mischung gemäß dem Patentanspruch 1, gekennzeichnet durch die Tatsache, daß das saure, von Kationen befreite Kasein- oder Käserei-Serum einen Gewichtsanteil von weniger als 10% , vorzugsweise 8%, Mineralstoffe enthält, einen Alkalinitätsgehalt der Asche unter 750, vorzugsweise unter 500 mg $Na_2Co_3$/g besitzt , und daß das Verhältnis der verschiedenen Bestandteile folgende Eigenschaften zeigt:

   Ca/P < 1; K/P < 1,3; und P/CL ≧ 0,6.

3. Mischung gemäß dem Patentanspruch 1, gekennzeichnet durch die Tatsache, daß das biologische, aromatische Product ein Gärprodukt eines Stammes von Lactococcuslactis subsp. diacetylactis ist, welches aus optimiertem Milch-Substrat entwickelt wurde.

4. Mischung gemäß einem der Patentansprüche 1 bis 3, gekennzeichnet durch die Tatsache, daß sie eine Diacetyl-Konzentration von etwa 100 ppm und einen pH-Wert von etwa 3,5 für eine titrierbare Säure von 300 bis 400° D zeigt.

5. Mischung gemäß einem der Patentansprüche 1 bis 4, gekennzeichnet durch die Tatsache, daß das saure Lacto-Serum gemäß einem Verfahren hergestellt wird, das folgende Etappen aufweist:

(a) Man bringt die Milch mit einem Harz, Austauscher von Kationen in saurer Form bei einer Temperatur von 0 bis 4°C während des notwendigen Zeitabschnittes in Kontakt, damit der pH-Wert der Milch auf einen Wert von 3,8 oder einen darunter liegenden Wert sinkt;

(b) nach Trennung des Harzes, welches für den Austausch benötigt wurde, mischt man die so behandelte Milch mit einer ausreichenden Menge von unbehandelter Milch, um den pH-Wert bis in die Nähe des isoelektrischen Punktes des Milchkaseines zu bringen; anschließend erwärmt man das erhaltene Gemisch bis zu einer Temperatur von 10 bis 60°, damit das in der behandelten und unbehandelten Milch anwesende Kasein gerinnt; anschließend trennt man das so geronnene Kasein vom Milchserum, das man gemäß der vorliegenden Erfindung erhalten will.

6. Verfahren zur Herstellung von Butter, das darin besteht, zuerst einen nicht sauren Rahm, mit einem Fettgehalt von 15% bis 75% des Gewichtes, bei einer Temperatur von 5 bis 20°C zu buttern, bis sich Butterklümpchen bilden, dann die noch übrig bleibende Buttermilch ablaufen zu lassen und anschließend die durch das Buttern erhaltenen Butterklümpchen zu kneten; dies wird gekennzeichnet durch die Tatsache, daß man während des Knetens den Butterklümpchen eine wässrige Mischung gemäß irgendeinem der Patentansprüche 1 bis 6, in einem Verhältnis von 25 bis 30 Litern pro Tonne Butterklümpchen beifügt, um eine aromatisierte, saure Butter zu erhalten, welche ungefähr 2 bis 4 ppm Diacetyl enthält und einen Serum-pH-Wert zwischen 4,8 und 5,2 zeigt.

7. Verfahren gemäß dem Patentanspruch 6, gekennzeichnet durch die Tatsache, daß man während des Knetens simultan eine Mischung gemäß einem der Patentansprüche 1 bis 5 und eine Lactose-Lösung beifügt, so daß der Feuchtigkeitsgehalt sowie der nicht fette Trokkenextraktgehalt der erhaltenen Butter reguliert wird.